(19) Europäisches Patentamt
European Patent Office
Office européen des brevets

(11) Publication number : **0 517 524 A1**

(12) **EUROPEAN PATENT APPLICATION**

(21) Application number : **92305137.9**

(51) Int. Cl.$^5$ : **C08K 5/3472,** C08L 83/07

(22) Date of filing : **04.06.92**

(30) Priority : **04.06.91 JP 159809/91**

(43) Date of publication of application :
**09.12.92 Bulletin 92/50**

(84) Designated Contracting States :
**DE FR GB**

(71) Applicant : **SHIN-ETSU CHEMICAL CO., LTD.**
**6-1, Ohtemachi 2-chome**
**Chiyoda-ku Tokyo (JP)**

(72) Inventor : **Fujiki, Hironao**
**No. 12 Iwahana-machi 7-chome**
**Takasaki-shi, Gunma-ken (JP)**
Inventor : **Miyakoshi, Masanobu**
**No. 16-37 Isobe 4-chome**
**Annaka-shi, Gunma-ken (JP)**
Inventor : **Saito, Hajime**
**No. 933-3 Ooaza Hitomi, Matsuida-machi**
**Usui-gun, Gunma-ken (JP)**

(74) Representative : **Ford, Michael Frederick et al**
**MEWBURN ELLIS 2 Cursitor Street**
**London EC4P 4BQ (GB)**

(54) **Roll base-forming composition and fixing roll.**

(57) A composition comprising (A) an organo-polysiloxane having at least two alkenyl groups, (B) an organohydrogenpolysiloxane having at least two hydrogen atoms directly attached to silicon atoms, (C) a platinum catalyst, (D) an inorganic filler, and (E) a triazole compound has relatively low hardness, improved physical properties, and flame retardancy and is effective for forming a roll base on a cylindrical core. Overlying a fluoride coat on the roll base provides a fixing roll. The overcoat closely adheres to the base so that the fixing roll may withstand dynamic compression at high temperatures without separation and is suited for high speed printing operation.

**FIG. 1**

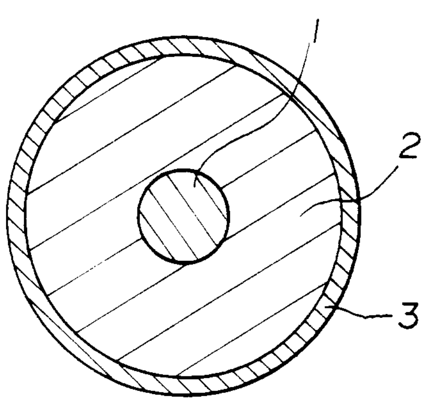




Jouve, 18, rue Saint-Denis, 75001 PARIS

This invention relates to a composition for forming a base layer of a fixing roll.

Fixing rolls used in dry copying machines, laser beam printers, facsimile machines and other business machines having printing function are generally formed of silicone rubber because the silicone rubber is improved in release, heat resistance, compression set and the like over other conventional rubber materials. To accommodate the increased operating speed of these printing business machines, an oil applicator is often used for supplying silicone oil to the fixing roll surface in order to facilitate toner release. An attempt was also made to lower the hardness of rubber material for allowing the fixing or nip width to be increased for providing a longer fixing time during high speed operation. The low hardness silicone rubber, however, tends to undesirably swell because silicone oil can be fused to the silicone rubber due to their similarity.

One typical prior art approach for overcoming the drawbacks of silicone rubber rolls is to cover rolls of low hardness solid or foam silicone rubber on their surface with flexible coatings of fluororubber latex or fluororesin, typically perfluoroalkylvinyl ether (PFA). Provision of such fluoride coatings is successful in increasing the life of fixing rolls, but gives rise to several problems. First, fluoride coatings are not as flexible as silicone rubber and thus tend to incur strains after passage of copying paper thereacross. Second, fixing rolls can be heated to 200°C or higher temperatures during fixation, which causes separation to occur at the interface between the fluoride coating and the underlying silicone rubber. Then, the fluoride coating layer can be locally creased, in extreme cases, to such an extent to obstruct paper passage. Improvements are needed in this respect.

Additionally, the fixing rolls are required to be flame retardant themselves in order to prevent them from igniting at high temperatures encountered during operation of the associated machines or from burning in the case of fire emergency of the machines. A high degree of flame retardancy is thus one of important requirements for the design of fixing rolls. There is a demand to render fixing rolls flame retardant.

Therefore, an object of the present invention is to provide a fixing roll base-forming material having relatively low hardness which has eliminated the above-mentioned drawbacks. Another object of the present invention is to provide a fixing roll base-forming material to which a fluoride coating can firmly adhere without the risk of creasing or separation even at temperature of 200°C or higher. A further object of the present invention is to provide a fixing roll base-forming material which is fully flame retardant. Yet another object of the present invention is to provide a fixing roll of high performance adapted for high speed operation.

According to a first aspect of the present invention, there is provided a composition for forming a roll base, comprising

(A) an organopolysiloxane having at least two alkenyl groups in a molecule,

(B) an organohydrogenpolysiloxane having at least two hydrogen atoms directly attached to silicon atoms in a molecule,

(C) a platinum catalyst,

(D) an inorganic filler, and

(E) a triazole compound.

A fixing roll is prepared by forming a base layer from the composition and covering the base layer on the outer surface with a fluoride overcoat. The fixing roll is low in hardness and flame retardant while the fluoride overcoat is closely and tightly bonded to the underlying base layer of the present composition.

Therefore, the present invention in a second aspect provides a fixing roll comprising a cylindrical core, a base layer of the present composition circumferentially enclosing the core, and a surface layer of a fluororubber or fluororesin circumferentially enclosing the base layer.

FIG. 1 is a cross-sectional view of a fixing roll according to one embodiment of the present invention.

Component (A) constituting the roll base-forming composition of the present invention is an alkenyl-containing organopolysiloxane. It generally has a viscosity of about 100 to 100,000 centipoise (cp) at 25°C and is preferably represented by the following general formula.

$$R^1_aSiO_{(4-a)/2}$$

In the formula, $R^1$ groups are independently selected from substituted or unsubstituted monovalent hydrocarbon groups having 1 to 10 carbon atoms, preferably 1 to 8 carbon atoms, for example, alkyl groups such as methyl, ethyl, propyl and butyl groups; alkenyl groups such as vinyl, propenyl and butenyl groups; aryl groups such as phenyl and xylyl groups; aralkyl groups such as benzyl and phenylethyl groups; and halogen substituted hydrocarbon groups such as a 3,3,3-trifluoropropyl group. The $R^1$ groups may be the same or different. It is essential that at least two alkenyl groups on average be contained in a molecule. Preferred as substituents on silicon atoms are vinyl groups among unsaturated groups and methyl groups among the other groups. In consideration of the possibility of silicone oil penetrating along the roll end surface, it is preferred to introduce a trifluoropropyl or phenyl group capable of imparting silicone oil resistance. Letter a is a number of from 1.9 to 2.4. The organo-polysiloxane may be either a linear or a branched one containing $R^1SiO_{3/2}$ or $SiO_{4/2}$ units. The organopolysiloxane may be prepared by well-known methods involving equilibration reaction between an or-

ganocyclopolysiloxane and $R^1SiO_{1/2}$ in the presence of an alkali or acid catalyst.

Several non-limiting examples of the alkenyl-containing organopolysiloxane (A) are given below wherein R's are substituents on silicon atoms as mentioned above.

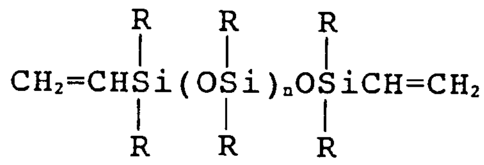 ,

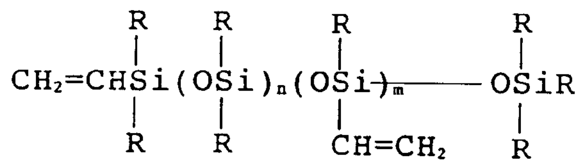 ,

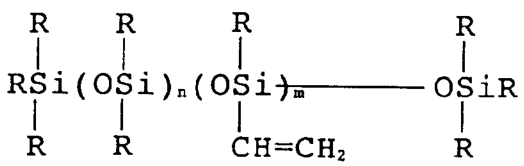 ,

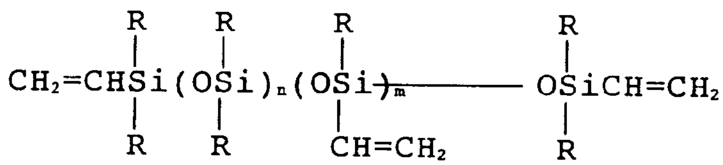

Letter m and n are positive integers satisfying the above-defined viscosity range, preferably m is 50 to 1000 and n is 1 to 10.

Component (B) is an organohydrogen-polysiloxane having at least two hydrogen atoms directly attached to silicon atoms in a molecule. Its molecular structure is not critical, and any of linear, branched, and cyclic molecular structures may be used. The substituents (other than hydrogen) directly attached to silicon atoms in this organohydrogenpolysiloxane are the same as exemplified for the substituents on silicon atoms in organopolysiloxane (A).

The component (B) or organohydrogen-polysiloxane reacts with organopolysiloxane (A) as a crosslinking agent. Component (B) is desirably added in such an amount as to provide 0.5 to 5, especially 0.8 to 2 mol of the hydrogen atoms directly attached to silicon atoms per mol of the alkenyl groups in component (A). With a hydrogen atom/alkenyl group molar ratio of less than 0.5, the composition would cure into silicone rubber having a lower crosslinking density and hence, poorer heat resistance so that it is unsuitable as roll-forming material. With a hydrogen atom/alkenyl group molar ratio of more than 5, foaming would occur due to dehydrogenation reaction and heat resistance would lower.

The organohydrogenpolysiloxane as component (B) can also be prepared by well-know methods, for example, by effecting equilibration reaction between octamethylcyclotetrasiloxane and/or tetramethylcyclotetrasiloxane and a compound containing $(CH_3)_3SiO_{1/2}$ and $H(CH_3)_2SiO_{1/2}$ units forming a terminal group, in the presence of a catalyst such as sulfuric acid, trifluoro-methanesulfonic acid, and methanesulfonic acid at a temperature of about -10°C to about 40°C.

Component (C) is a platinum catalyst for promoting the addition reaction or hydrosilylation between components (A) and (B). The catalyst is added in a catalytic amount which may be suitably determined in accordance with the desired curing rate, often 0.1 to 1,000 ppm, most often 1 to 200 ppm calculated as platinum. Examples of the platinum catalyst include platinum black, chloroplatinic acid, alcohol-modified chloroplatinic acid, and complexes of chloroplatinic acid and olefins, aldehydes, vinylsiloxanes or acetylene alcohol.

Component (D) is an inorganic filler which may be selected from well-known fillers commonly used for conventional silicone rubber. Examples include ground quartz, diatomaceous earth, fused quartz ($SiO_2$), alumina ($Al_2O_3$), red iron oxide ($Fe_2O_3/Fe_3O_4$), and titanium oxide (TiO) alone and in admixture of two or more. It is possible to add silica or titanium oxide having a specific surface area of at least 50 $m^2/g$ in order to prevent the filler from settling. Since the roll base-forming composition of the present invention is used to form a roll base layer between a core or mandrel and a surface layer of fluoride material, consistent hardness is one of the important requirements. In this regard, the filler should preferably be at pH 4 to 8 because more acidic or alkaline fillers can incur cleavage of organopolysiloxane which causes a change in the hardness of the roll.

The inorganic filler is blended in an amount of at least 10% by volume, preferably 10 to 50% by volume of the entire composition because expansion and contraction of the roll due to a temperature change is minimized. Less than 10% by volume of inorganic filler is too small to suppress thermal expansion and to provide strength. More than 50% by volume of inorganic filler is effective for minimizing thermal expansion, but would increase the hardness of the composition to such an extent that the roll formed therefrom might not allow a sufficient nip width to reproduce clear images in high speed machines.

Component (E) is a triazole which is effective for improving the flame retardancy and reducing the compression set of the composition. Examples of the triazole include 1,2,3-triazole, 1,2,4-triazole, benzotriazole, and triazole derivatives such as 1-methyl-1,2,3-triazole, 1-phenyl-1,2,3-triazole, 4-methyl-2-phenyl-1,2,3-triazole, 1-benzyl-1,2,3-triazole, 4-hydroxy-1,2,3-triazole, 1-benzamide-4-methyl-1,2,3-triazole, 1-methyl-1,2,4-triazole, 1,3-diphenyl-1,2,4-triazole, 1-methylbenzotriazole, 5,6-di-methylbenzotriazole, 2-phenylbenzotriazole, and 1-hydroxybenzotriazole, with the benzotriazole being preferred.

Preferably, the triazole is blended in an amount of about 0.005 to 1 part by weight per 100 parts by weight of component (A). Lesser amounts of triazole would fail to impart flame retardancy whereas more than 1 part of triazole would be detrimental to curing reaction, retarding curing rate.

It is known in the art that triazoles provide self-extinguishing properties to silicone rubber. However, simply adding a triazole alone to silicone rubber is insufficient to impart a high degree of flame retardancy required for the roll material. By adding a triazole in combination with inorganic filler (D), especially 10 to 50% by volume of the composition of inorganic filler (D), the flame retardancy attributable to the addition of triazole is enhanced to an extent to pass grade V-1 according to UL 94 (Underwriters' Laboratories, Inc.). The concurrent addition of triazole and filler also allows the composition to have a compression set of less than 10% as measured at 180°C and 22 hours.

The roll base-forming composition of the invention may be prepared by mixing the foregoing components (A) to (E). In addition to the essential components, various additives may be added to the composition if desired. Useful additives are coloring agents; heat resistance modifiers such as cesium oxide, cesium hydroxide, carbon, titanium oxide and red iron oxide; and addition reaction controlling agents, e.g., vinyl-containing organopolysiloxanes such as vinylcyclotetrasiloxane, triallylisocyanate, alkyl maleates, acetylene alcohols and silane- or siloxane modified products thereof, hydroperoxide and tetramethylethylenediamine. Further, a silicone resin basically comprising $SiO_2$ and $R_3SiO_{1/2}$ units, containing at least one alkenyl group in a molecule and soluble in silicone oil may be used for improving the mechanical strength of cured products without increasing the viscosity of the composition.

It is not critical how to mix the components and any desired mixer may be used. The order of addition is not critical although the roll base-forming composition is preferably prepared by mixing components (A) and (C) to form a first part, separately mixing components (B) and (E) to form a second part, and thereafter mixing the first and second parts.

Referring to FIG. 1, a fixing roll is illustrated in cross section. The roll includes a cylindrical core in the form of a metal mandrel 1, a roll base layer 2 closely enclosing the core 1, and a surface layer 3 closely enclosing the base layer. The base layer 2 is formed of the present composition to the shape of a hollow cylinder having a substantial radial thickness. The surface layer 3 is formed of a fluororubber or fluororesin. More particularly, a cylindrical thin gage tube or heat-shrinkable tube of fluororubber or fluororesin such as PFA is sleeved over the base layer 2 whereupon the tube is firmly joined to the underlying base layer by any suitable means to form the surface layer 3. Alternatively, a fluororubber or fluororesin coating composition is applied to the outer surface of the base layer 2 to form the surface layer 3. Since fixing rolls in dry copiers, facsimile machines and laser beam printers are exposed to high temperatures, the silicone rubber forming the roll base layer should preferably have a compression set of up to 10% at such high temperatures, experience a minimal change in hardness due to cleavage and oxidation of polysiloxane, and give off little volatile components because the fluoride surface layer can otherwise be bulged by gases evolving from the roll base layer heated at high temperatures. To meet these requirements, it is preferred to remove low-molecular weight siloxanes from the roll base-forming composition before or after the composition is shaped into a roll base layer. Removal of low-molecular weight siloxanes may be accomplished, for example, by molding the composition into a roll base layer and heating

the layer. Since low-molecular weight siloxanes are mainly contained in the organopolysiloxane as component (A), it is effective to remove low-molecular weight siloxanes from the organopolysiloxane (A) just before the preparation of the roll base-forming composition. The latter method is recommended from the standpoints of molding and economy.

## EXAMPLE

Examples of the present invention are given below by way of illustration and not by way of limitation. All parts are by weight.

### Examples 1-3 & Comparative Examples 1-2

Five roll base-forming compositions were prepared. Parts A and B were first prepared by uniformly agitating and mixing the components shown in Table 1 in a universal agitator manufactured by Dalton Co. Then equal amounts of Parts A and B were uniformly mixed to form each composition.

### Polysiloxane I

A vinyldimethylsiloxy-terminated dimethylpolysiloxane having a viscosity of 2,000 cp at 25°C and containing 780 ppm of a cyclic low-molecular weight siloxane (n = 3 to 20).

### Polysiloxane II

A vinyldimethylsiloxy-terminated dimethylpolysiloxane having a viscosity of 2,000 cp at 25°C and containing 4,800 ppm of a cyclic low-molecular weight siloxane (n = 3 to 20).

### Hydrogenpolysiloxane

A hydrogenpolysiloxane having the following structural formula.

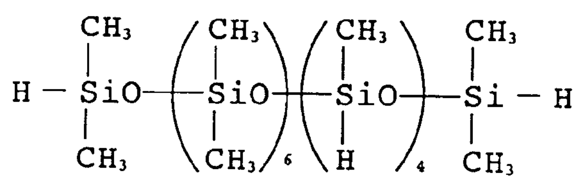

### Quartz powder

Quartz powder having a mean particle size of 20 μm and pH 4.5.

### Red iron oxide

Red iron oxide having a mean particle size of 0.2 μm and pH 6.

### Platinum catalyst

A vinyl complex of chloroplatinic acid (containing 1% by weight of platinum).

### Fumed silica

Hydrophobic fumed silica having a specific surface area of 100 $m^2/g$.

Each of the roll base-forming compositions was deaerated and molded into a sheet of 2 cm thick by means of a press molding machine by curing at 120°C for 10 minutes. After post curing at 200°C for 4 hours, the sheet was measured for mechanical properties according to JIS K-6301. A similarly molded cylindrical sample having an outer diameter of 29.0 mm and a height of 12.7 mm was measured for compression set at 180°C /22 hours according to JIS K-6301. A similarly shaped sheet of 0.8 mm thick was subjected to a flame retardant test according to the UL 94 safety standards. The results are shown in Table 1.

Next, a fixing roll was manufactured using an injection molding machine. The mold was loaded with an aluminum mandrel having a primer applied thereon and a PFA tube which had been surface treated with sodium vapor and coated with a primer. Each of the roll base-forming compositions was injection molded between the mandrel and the PFA tube, heat cured at 150°C for 30 minutes, removed from the mold, and post cured at 200°C for 4 hours. Five fixing rolls were manufactured in this way.

The fixing rolls were measured for surface hardness. The fixing rolls were heated at 230°C for 200 hours and then visually observed on the surface for evaluating heat resistance in accordance with the following ratings.

Ex: Surface layer remained sound without bulge or crease
Good: Minor changes, but no problem on practical use
Poor: Bulge and creases, leading to undesirable printing and other problems

The results are also shown in Table 1.

Table 1

| | Example 1 | | Example 2 | | Example 3 | | Com-parative Example 1 | | Com-parative Example 2 | |
|---|---|---|---|---|---|---|---|---|---|---|
| | A | B | A | B | A | B | A | B | A | B |
| Composition (pbw) | | | | | | | | | | |
| Polysiloxane I | 100 | 100 | 100 | 100 | — | — | 100 | 100 | 100 | 100 |
| Polysiloxane II | — | — | — | — | 100 | 100 | — | — | — | — |
| Hydrogenpolysiloxane | — | 2 | — | 2.5 | — | 1 | — | 3 | — | 2 |
| Quartz powder | 75 | 75 | 50 | 50 | 75 | 75 | 20 | 20 | 75 | 75 |
| Red iron oxide | 2 | 2 | 25 | 25 | 2 | 2 | 2 | 2 | 2 | 2 |
| Platinum catalyst | 0.8 | — | 0.8 | — | 0.8 | — | 0.8 | — | 0.8 | — |
| Benzotriazole | — | 0.02 | — | 0.02 | — | 0.02 | — | 0.02 | — | — |
| Fumed silica | 2 | 2 | 2 | 2 | 2 | 2 | 2 | 2 | 2 | 2 |
| Filler content, vol% | 23 | | 20 | | 23 | | 8 | | 23 | |
| Properties | | | | | | | | | | |
| Hardness, JIS-A | 26 | | 25 | | 25 | | 25 | | 26 | |
| Elongation, % | 330 | | 340 | | 350 | | 300 | | 330 | |
| Tensile strength, $kgf/cm^2$ | 30 | | 28 | | 32 | | 18 | | 30 | |
| Compression set, % | 6 | | 8 | | 6 | | 9 | | 21 | |
| Flame retardancy (UL94) | V-0 | | V-0 | | V-0 | | V-1 | | V-2 | |
| Roll surface hardness, JIS-A | 23 | | 23 | | 22 | | 20 | | 22 | |
| Roll surface after heating | Ex | | Ex | | Good | | Poor | | Ex | |

As seen from Table 1, the roll base-forming compositions of the present invention show a good profile of physical properties including hardness, elongation, tensile strength, compression set, and flame retardance. Fixing rolls using such roll base-forming compositions of the present invention maintain a good surface state even at elevated temperatures. The fixing roll manufactured from the material of Comparative Example 2 showed good high-temperature properties, but experienced considerable strains after compression interrupting paper passage and was less flame retardant leaving a fire safety problem.

The roll base-forming compositions of the present invention are adapted to form roll bases to the surface of which fluoride overcoats can closely and firmly adhere. The overcoats remain close to the bases without the risk of separation even at temperatures of 200°C or higher. The resulting fixing rolls have relatively low hardness and enough high-temperature properties and flame retardancy to insure satisfactory performance during high-speed operation.

Although some preferred embodiments have been described, many modifications and variations may be made thereto in the light of the above teachings. It is therefore to be understood that the invention may be practiced otherwise than as specifically described.

## Claims

**1.** A composition for forming a roll base, comprising

(A) an organopolysiloxane having at least two alkenyl groups in a molecule,
(B) an organohydrogenpolysiloxane having at least two hydrogen atoms directly attached to silicon atoms in a molecule,
(C) a platinum catalyst,
(D) at least 10% by volume of the composition of an inorganic filler, and
(E) a triazole compound.

**2.** A composition according to claim 1 wherein component (A) is represented by the general formula

$$R^1_aSiO_{(4-a)/2}$$

wherein the $R^1$ groups are the same or different and are independently selected from substituted or unsubstituted monovalent hydrocarbon groups having 1 to 10 carbon atoms, preferably 1 to 8 carbon atoms, and halogen substituted hydrocarbon groups, and wherein a is a number of from 1.9 and 2.4.

**3.** A composition according to claim 1 or 2 wherein component (A) has a viscosity of about 100 to 100,000 centipoise (cp) at 25°C.

**4.** A composition according to any of claims 1 to 3 further comprising an additive selected from colouring agents, heat resistance modifiers and addition reaction controlling agents.

**5.** A composition according to any of claims 2 to 4 which contains

an amount of component (B) to provide 0.5 to 5 mol of hydrogen atoms directly attached to silicon atoms per mol of the alkenyl group in component (A),
a catalytic amount of component (C),
10 to 50% by volume of the composition of component (D), and
0.005 to 1 part by weight per 100 parts by weight of component (A).

**6.** A fixing roll comprising

a cylindrical core,
a base layer of the composition according to any of claims 1 to 4, the base layer enclosing the core,
a surface layer of a fluororubber or fluororesin enclosing the base layer.

FIG. 1

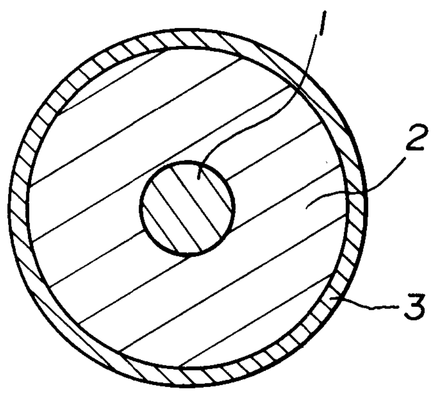

European Patent Office

# EUROPEAN SEARCH REPORT

Application Number

EP 92 30 5137

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WORLD PATENTS INDEX LATEST<br>Section Ch, Week 8924, 9 August 1989<br>Derwent Publications Ltd., London, GB;<br>Class A, AN 89-176253<br>& JP-A-1 116 671 (SHINETSU CHEM IND KK) 9 May 1989<br>* abstract * | 1-6 | C08K5/3472<br>C08L83/07 |
| X | WORLD PATENTS INDEX LATEST<br>Section Ch, Week 8621, 16 July 1986<br>Derwent Publications Ltd., London, GB;<br>Class A, AN 86-133879<br>& JP-A-61 069 865 (TORAY SILICONE KK) 10 April 1986<br>* abstract * | 1-5 | |
| P,X | WORLD PATENTS INDEX LATEST<br>Section Ch, Week 9212, 20 May 1992<br>Derwent Publications Ltd., London, GB;<br>Class A, AN 92-091731<br>& JP-A-4 033 961 (TORAY IND INC) 5 February 1992<br>* abstract * | 1-5 | |
| | | | TECHNICAL FIELDS SEARCHED (Int. Cl.5 ) |
| X | EP-A-0 388 201 (SHIN-ETSU CHEMICAL CO., LTD.)<br>* page 2, line 55 - page 3, line 4; claims 1,4-8 *<br>* page 6, line 8 - page 6, line 24 * | 1-6 | C08K<br>C08L |
| X | EP-A-0 276 831 (TORAY SILICONE COMPANY, LTD.)<br>* page 3, column 4, line 58 - page 4, column 5, line 28; claims 1-4 * | 1-6 | |
| A | US-A-4 087 399 (M. HAMADA ET AL.)<br>* claims 1-6 * | 1-5 | |
| A | EP-A-0 203 753 (TORAY SILICONE CO., LTD.)<br>* page 8, line 21 - line 29; claims 1-8,11 * | 1-5 | |

The present search report has been drawn up for all claims

| Place of search | Date of completion of the search | Examiner |
|---|---|---|
| THE HAGUE | 01 SEPTEMBER 1992 | KANETAKIS I. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)